(19) Europäisches Patentamt
European Patent Office
Office européen des brevets

(11) **EP 3 393 825 B1**

(12) **EUROPEAN PATENT SPECIFICATION**

(45) Date of publication and mention
of the grant of the patent:
**19.08.2020 Bulletin 2020/34**

(51) Int Cl.:
**B60C 9/20** *(2006.01)*    **B60C 1/00** *(2006.01)*

(21) Application number: **16822359.2**

(86) International application number:
**PCT/US2016/067677**

(22) Date of filing: **20.12.2016**

(87) International publication number:
**WO 2017/112630 (29.06.2017 Gazette 2017/26)**

(54) **METHOD OF CREATING TIRE BEAD CORE WITH A CARBON FIBER COMPOSITE**

VERFAHREN ZUR HERSTELLUNG EINES WULSTKERNES FÜR REIFEN MIT EINER KARBONFASER KOMPOSIT

TRINGLE DE TALON DE PNEUMATIQUE EN MATÉRIAU COMPOSITE À BASE DE FIBRES DE CARBONE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.12.2015 PCT/US2015/067069**

(43) Date of publication of application:
**31.10.2018 Bulletin 2018/44**

(73) Proprietor: **Compagnie Générale des
Etablissements Michelin
63000 Clermont-Ferrand (FR)**

(72) Inventor: **BUCHER, Laurent
Greenville, South Carolina 29605 (US)**

(74) Representative: **Casalonga
Casalonga & Partners
Bayerstraße 71/73
80335 München (DE)**

(56) References cited:
**EP-A1- 1 698 493    EP-A1- 2 072 283
EP-A1- 2 080 641**

**Description**

**PRIORITY STATEMENT**

The present application claims priority under 35 U.S.C. § 119 to PCT/US15/67069 , filed December 21, 2015.

**FIELD OF THE INVENTION**

The subject matter of the present disclosure relates generally to a process for creating a bead core for a tire.

**BACKGROUND OF THE INVENTION**

A common tire construction includes a crown surmounted by a tread and connected to opposing sidewalls that extend from opposing bead portions. The bead portions are configured for mounting onto a wheel rim having an opposing pair of seats for receipt of the bead portions. Each bead portion typically includes at least one bead core.

The bead core is commonly constructed as a ring or hoop contained within rubber materials forming the bead portion. The bead core provides an anchor for the tire carcass ply or body ply, which extends between the bead cores and passes through the sidewalls and crown portion. For a pneumatic tire, the body ply helps constrain the shape of the tire upon inflation.

The bead core has conventionally been constructed from steel. For example, one or more steel wires may form cables that are wrapped into the shape of the hoop or ring. The number of wires or cables can depend upon e.g., the intended tire size. Different cross-sectional shapes for the bead core may be used.

Unfortunately, the steel used for such constructions has a density of e.g., about 7.8 grams per cubic centimeter. As such, collectively the pair of bead cores adds a significant amount to the overall weight of the tire. Increased weight typically means increased inertia and, therefore, an undesirable reduction in fuel economy. Reducing the weight of the bead portions is, therefore, desirable.

With respect to strength and stiffness, carbon fiber composites can provide comparable mechanical properties to steel. More desirably, carbon fiber composites can have a much lower density including e.g., as low as 1.6 grams per cubic centimeter. As such, the ability to successfully substitute carbon fiber composites for steel in the construction of the bead cores would result in significant weight reduction.

The use of carbon fiber composites for bead core construction presents various challenges. With certain exceptions, carbon fiber composites typically exhibit minimal strain at break. More particularly, carbon fiber composites show less strain at break than is typically associated with e.g., steel. In generally, materials that show plasticity or strain before break can be preferable to materials that do not - depending upon the particular application.

Accordingly, a method of creating a tire bead core constructed from one or more carbon fiber composites would be useful and beneficial.

**SUMMARY OF THE INVENTION**

The present invention provides a method of creating a bead core for a tire, wherein the bead core is formed from a carbon fiber composite. The bead core is formed into the shape of a hoop or ring needed for the bead core before the carbon fiber composite is fully cured. The strain present in the carbon fiber composite after forming the ring of the bead core is carefully controlled to be less than 0.1 percent. A tire incorporating such a bead core within the bead portions of the tire can experience substantial savings in weight. Additional objects and advantages of the invention will be set forth in part in the following description, or may be apparent from the description, or may be learned through practice of the invention.

In one exemplary aspect, the present invention provides a method for producing a bead core for the bead portion of a tire. The method can include forming an elongate and uncured carbon fiber composite into the shape of a ring or coil, and curing the carbon fiber composite after the forming. After forming and curing, the carbon fiber composite has a strain $\varepsilon$ of 0.1 percent or less.

The bead core can be used in a tire. Such tire may have, e.g., a pair of opposing bead portions and a pair of opposing sidewall portions. Each sidewall portion is connected with a bead portion. A crown portion is connected between opposing sidewall portions. A pair of beads is positioned within each bead portion. Each bead includes a carbon fiber composite extending circumferentially around an axis of rotation of the tire. The carbon fiber composite is under a strain $\varepsilon$ of 0.1 percent or less.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

**BRIEF DESCRIPTION OF THE DRAWINGS**

A full and enabling disclosure of the present invention, including the best mode thereof, directed to one of ordinary skill in the art, is set forth in the specification, which makes reference to the appended figures, in which:

FIG. 1 illustrates a perspective view of an exemplary embodiment of a tire of the present invention.
FIG. 2 is a schematic perspective view of a portion of an exemplary pultrusion process as maybe used in the present invention.

FIG. 3 illustrates a side view of a portion of an exemplary process as may be used in creating an exemplary tire of the present invention.

FIG. 4 illustrates a side view of a portion of another exemplary process as may be used in creating an exemplary tire of the present invention.

FIG. 5 illustrates a side view of a portion of another exemplary process as may be used in creating an exemplary tire of the present invention.

FIG. 6 is a schematic view of a curved composite as will be further described.

The use of the same or similar reference numbers in the figures denotes the same or similar features unless otherwise indicated.

## DETAILED DESCRIPTION

For purposes of describing the invention, reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment, can be used with another embodiment to yield a still further embodiment. Thus, it is intended that the present invention covers such modifications and variations as come within the scope of the appended claims and their equivalents.

"Axial direction" or the letter "A" in the figures refers to a direction parallel to the axis of rotation of e.g., a tire as it travels along a road surface.

"Radial direction" or the letter "R" in the figures refers to a direction that is orthogonal to axial direction A and extends in the same direction as any radius that extends orthogonally from axial direction A.

"Circumferential direction" or the letter C is orthogonal to both radial direction R and axial direction A at any given point about the circumference of the tire and is defined by the direction of rotation of the tire about its axis of rotation.

"Equatorial plane" or EP means a plane that passes perpendicular to the axis of rotation and bisects the tire into substantial equal and opposing halves.

"Meridian plane" means a plane that includes the axis of rotation and intersects the tire.

"Carbon fiber" is a term that will readily understood by one of ordinary skill in the art and includes strands of carbon that may be twisted together to e.g., create yarn or rovings.

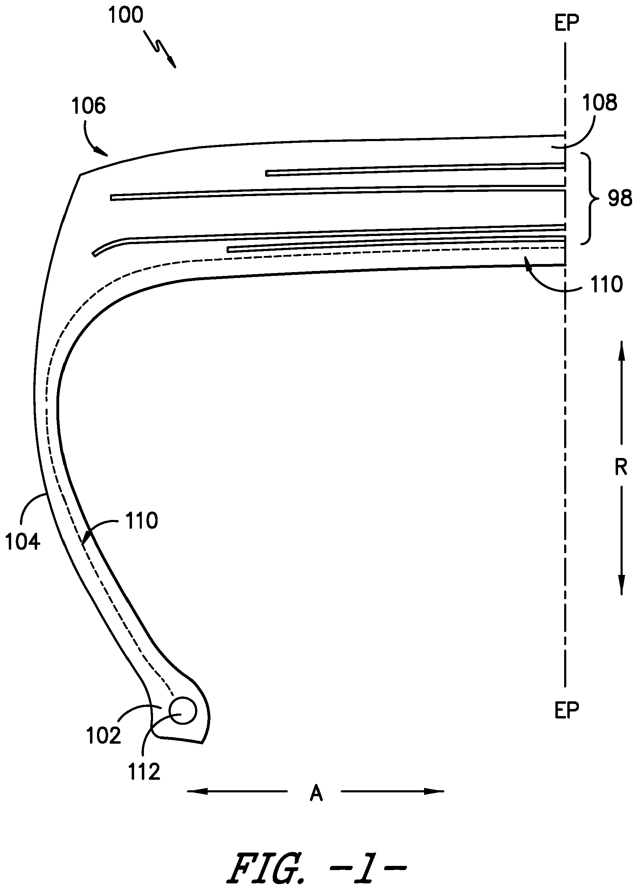

FIG. 1 is a schematic illustration of a tire 100 of the present invention. Tire 100 is shown in a cross-section taken along a meridian plane of the tire. The meridian plane includes the axis of rotation, which is parallel to axial direction A and about which tire 100 rotates during use. Tire 100 is symmetrical about the equatorial plane EP and, therefore, bisects tire 100 into opposing halves of substantially the same construction, for which FIG. 1 depicts only one of the opposing halves. Tire 100 is used by way of example only. One or ordinary skill in the art, using the teachings disclosed herein, will readily understand that the present invention is not limited to any particular construction for tire 100 and a variety of other tire shapes and constructions may also be used.

Tire 100 includes a pair of opposing bead portions 102 and a pair of opposing sidewall portions 104 where only one of each pair is shown in FIG. 1 as will be readily understood by one of ordinary skill in the art. Tire 100 also includes a crown portion 106 connected to each opposing sidewall portion 104 and extending therebetween. A tread layer 108 forms the radially outermost portion of crown portion 106. A body ply 110 extends from each bead portion 102, through each sidewall portion 104, and through the crown portion 106. Body ply 110 is anchored in bead portion 102 and may wrap around bead cores 112, which are positioned in an opposing manner in each bead portion 102. Tire 100 may include one or more belts 98 in various configurations and locations within crown 108.

Bead cores 112 are formed as rings or hoops that extend circumferentially around the axis of rotation of tire 100. As previously explained, bead cores 112 help anchor body ply 110 and maintain tire 100 onto a rim or wheel once mounted. Although shown as circular in Fig. 1, a variety of cross-sectional shapes may be used for each bead core 112.

Conventional constructions for bead cores have used steel wires or cords as previously described. For the present invention, each bead core 112 is constructed from a carbon fiber composite formed in the shape of the ring or hoop having a predetermined radius depending upon the size required for tire 100. Using manufacturing methods such as will be described herein, the strain condition $\varepsilon$ of the carbon fiber composite is carefully controlled by curing the carbon fiber composite after it has been formed into the desired ring shape.

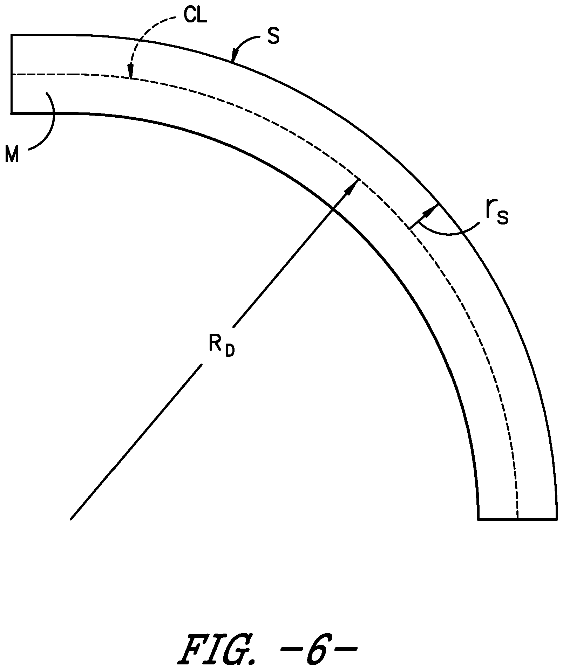

With reference to FIG. 6, equation (1) below provides for a determination of the strain $\varepsilon$ in percent at surface S of a material M that has been changed or formed from a linear shape to a curved shape including a ring or coil. Material M has a radius $r_s$ from its centerline CL to surface S. After bending from a linear to a curved condition, material M now has a radius $R_D$ as measured to centerline CL of material M.

$$\text{Eqn: } (1)$$

$$\varepsilon = (r_s / R_D) * 100$$

In general, carbon fiber composites exhibit a very low strain ε at break. For example, a typical range for the strain ε at break would be 0.7 percent to 2.2 percent for a carbon fiber composite. Unfortunately, the composites exhibiting the higher strains at break are very expensive. When a cured carbon fiber composite is formed into the desired ring or coil shape for a bead core of a tire such as bead core 112, the material's change from a linear to a curved shape consumes a portion of the available strain. For example, a strain as high as 0.2 percent could be created within the carbon fiber composite by forming it into the desired ring or coil shape for bead core 112. If such carbon fiber composite has a strain ε at break of e.g., 0.7 percent, then ∼ 29 percent of the strain available is consumed by the manufacturing process. This leaves very little strain available before break during operation of the tire - an undesirable result. However, by curing the carbon fiber composite after the desired ring shape for bead core 112 has been formed, the present invention allows for maximizing the amount of strain available for bead core 112's use in e.g., tire 100.

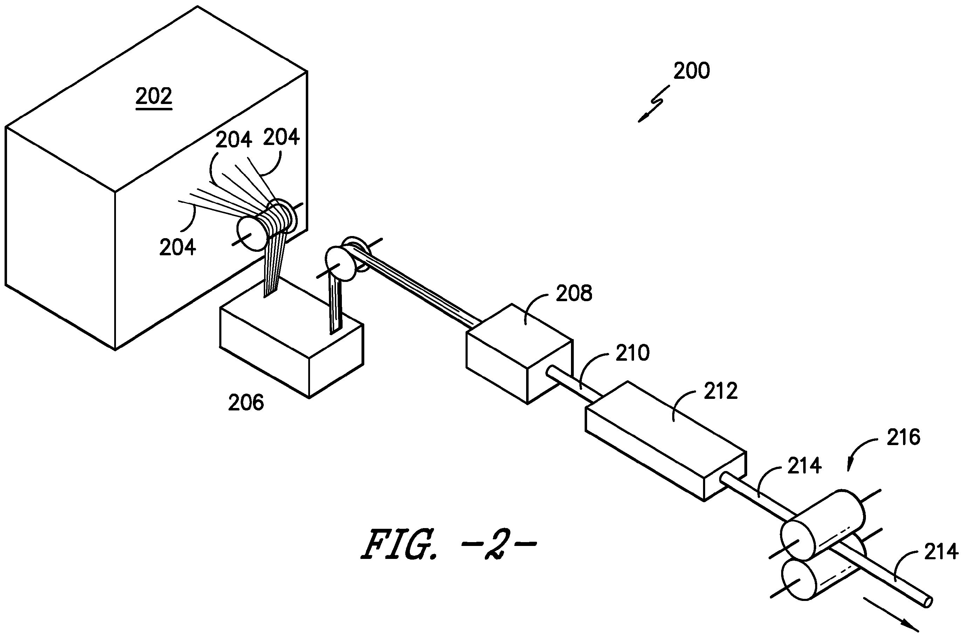

FIG. 2 provides a schematic illustration of an exemplary embodiment of a pultrusion process 200 as may be used to manufacture carbon fiber composites of the present invention. As shown, process 200 include a supply 202 of continuous carbon fibers, which can be provided as e.g., rovings 204 from a plurality of bobbins or other feeds (not shown). Multiple feeds of rovings 204 can be used depending on e.g., the strength and size of the composite desired.

Rovings 204 are then passed through a resin bath 206 where they are coated with a resin. Alternatively, rovings 204 of carbon fibers may be impregnated with the resin in a pressure chamber or other impregnation device. A variety of resins may be used such as e.g., one or more epoxy resins, vinyl ester resins, and unsaturated polyester resins. The resin may be a thermoset resin. Other resin types may be used as well.

After application of the resin, rovings 204 with the applied resin are passed through a pre-forming die 208 having a cross section of a first predetermined area and shape to provide a first precursor 210 with a predetermined shape. First precursor 210 can then be passed through a forming die 212 also having a cross-section of a second predetermined size and shape so to provide a second precursor 214, which is an elongate carbon fiber composite. Rollers 216 or other mechanisms may be used to pull precursor 214 through forming die 212.

Importantly, the resin in second precursor 214 is totally uncured. Alternatively, if resin is partially cured at this point, the level of curing is minimized so as not to introduce any strain into the carbon fiber composite when it is formed into a ring or coil and then cured for bead core 112 or an intermediate that will cured and then further formed for use as bead core 112 as will now be described.

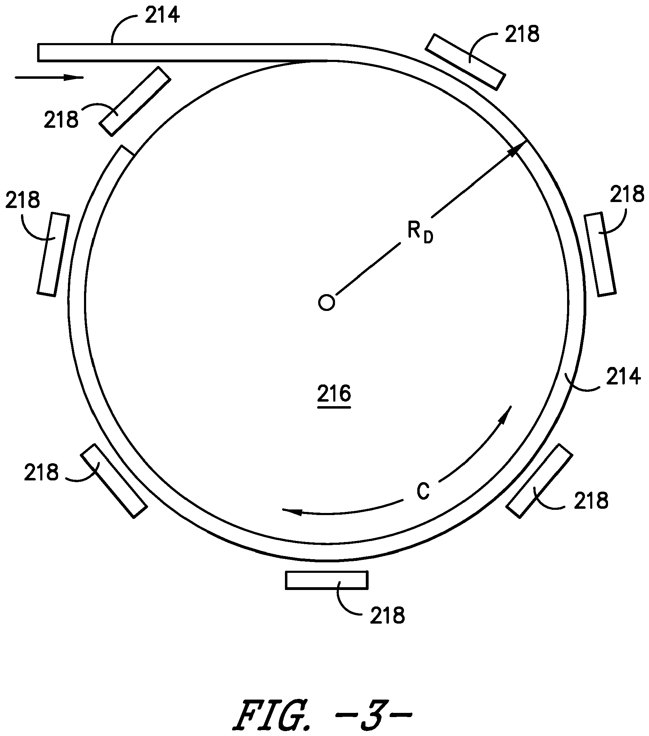

FIG. 3 provides an exemplary embodiment where second precursor 214 is wrapped onto a wheel or roller 216. For example, roller 216 may provide second precursor 214 with a radius $R_D$, which is selected based upon e.g., the radius desired for the ring forming bead core 112 or an intermediate that will be further formed into bead core 112.

Second precursor 214 is wrapped around roller 216 the number of times desired for forming bead core 112 or an intermediate. For example, second precursor 214 may be wrapped around roller 216 multiple times such as 2, 3, 4, 8 times or more. For this exemplary embodiment, second precursor 214 is wrapped over itself to form a precursor to bead core 112.

Once the desired number of wraps or loops around roller 216 have been completed, the resin of second precursor 214 is cured using e.g., heat, radiation, or other energy sources 218 positioned about roller 216. After curing, the now formed bead core 112 (formed from multiple cured loops of second precursor 214) can be removed. Because precursor 214 was cured after being formed into a ring on roller 216, the strain in the resulting bead core 112 from the carbon fiber composite precursor 214 will be minimal or have a strain $ε ≤ 0.1$ percent.

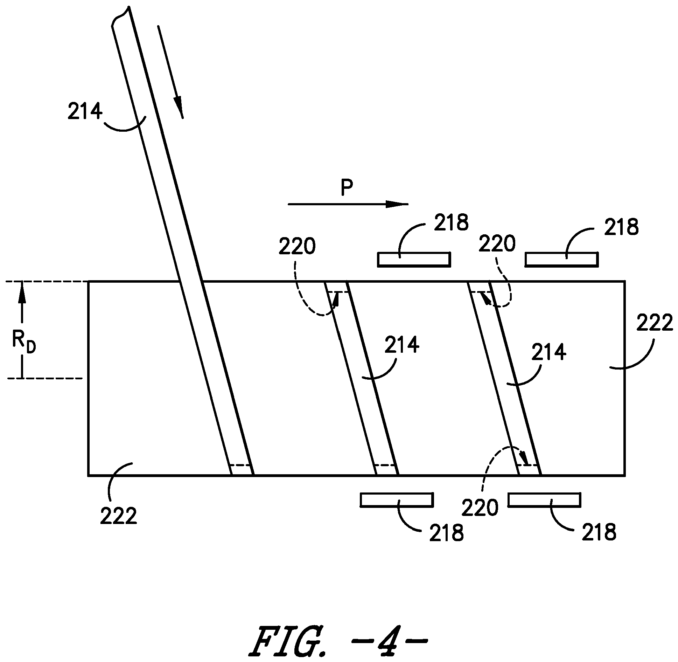

FIG. 4 provides another exemplary embodiment where second precursor 214 is wrapped in a spiral manner about a cylindrical roller 222 as it is advanced along a process direction P. Cylindrical roller 222 includes grooves 220 into which second precursor 214 is received and provide a radius $R_D$ depending upon the radius desired for the ring forming bead core 112 or an intermediate further formed into bead core 112 after curing. As second precursor 214 is wrapped and advanced along process direction P, it is cured using e.g., heat, radiation, or other energy sources 218 positioned about roller 222. After curing, the now formed bead core 112 (formed from multiple cured loops of second precursor 214 can be removed from roller 220. Again, because precursor 214 was cured after being formed into a ring on roller 222, the strain in the resulting bead core 112 from the carbon fiber composite precursor 214 will be minimal or have a strain $ε ≤ 0.1$ percent.

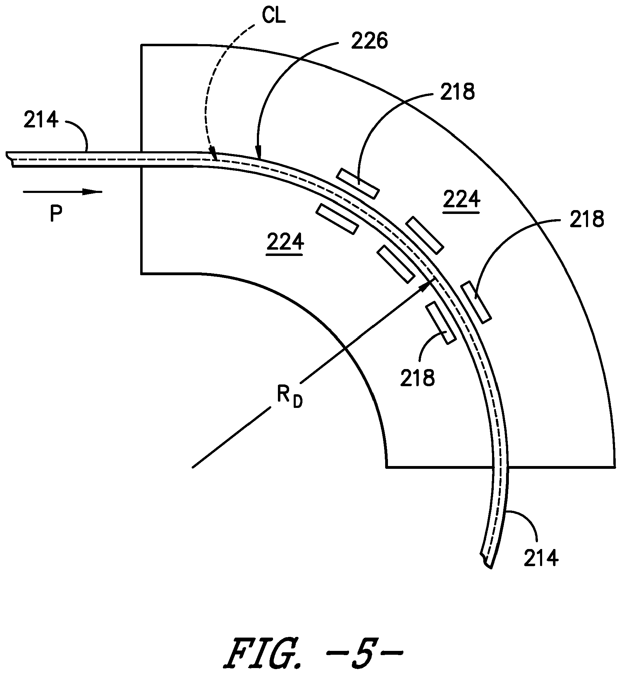

Another exemplary embodiment is depicted in FIG. 5, which includes a forming die 224 through which second precursor 214 is moved along process direction P. As second precursor 214 moves through die 224 it is formed into a ring or coil having radius $R_D$ depending upon the radius desired for the ring forming bead core 112 or an intermediate that will be used to make it after curing. As second precursor 214 is advanced through die 224, it is cured using e.g., heat, radiation, or other energy sources 218 positioned along the channel 226 in die 224. A coil of multiple loops or rings can be used to create bead core 112 as previously indicated. As with previous embodiments, because precursor 214 was cured after being formed into a ring or coil using die 224, the strain in the resulting bead core 112 from the carbon fiber composite precursor 214 will be minimal or have a strain $ε ≤ 0.1$ percent.

In another embodiment of the invention, precursor 214 may be converted to an intermediate coil or ring that is cured and then e.g., stored. After curing, the cured intermediate may then be provided with additional curvature to form the ring or coil of the shape desired for bead core 112.

For example, precursor 214 may be provided with a curvature having an intermediate radius and then further bent to a different radius having the curvature desired for bead core 112. Rather than attempting to form precursor 214 into a ring having the radius needed for each tire size desired, it may be more desirable that precursor 214 is first formed into an intermediate ring or coil having a predetermined but intermediate radius, cured, and then provided with additional curvature depending upon the particular tire size needed.

By way of example, assume precursor 214 is formed into an intermediate ring or coil that has a radius $r_s$ of 1.3 mm using roller 222 and has a radius $R_{D1}$ of 570 mm after curing. Suppose precursor 214 is now further formed into a ring or coil forming bead core 112 with a radius $R_{D2}$ of 700 mm. In such case, the strain ε in the resulting carbon fiber composite of bead core 112 would be 0.1 percent or less as shown by the following calculation: (1.3 / 570) - (1.3 / 700) = 0.228 percent - 0.186 percent = 0.042 percent.

In such case, if the strain at break of the carbon fiber composite is as low as 0.7 percent, the formation of bead core 112 by bending the composite has used only 6 percent of the strain available before break. As such, the present invention is very advantageous for the use of carbon fiber composites in the formation of bead core 112.

After forming bead core 112, the shape could be set by several metallic clips, a coating like glue could be applied to increase the adhesion between the composite and rubber, and/or it may be further sheathed in one or more rubber materials to create bead portion 102 or to create a precursor to bead portion 102. A variety of different rubber materials may be used.

As stated, different carbon fiber composites may be used with the present invention created by processes such as described in FIG. 2 or others as well. In one exemplary embodiment, the carbon fiber composite used to create bead core 112 has a strain at break of 2.2 percent or less. In other exemplary embodiment, the carbon fiber composite used to create bead core 112 has a strain in the range of 0.6 percent to 1.8 percent. As used herein, the strain at break is measured according to an ASTM standard such as e.g., ASTM D3916 Standard Test Method for Tensile Properties of Pultruded Glass-Fiber-Reinforced Plastic Rod.

In certain embodiments, the carbon fiber composite used for bead core 112 has a tensile modulus in the range of 100 GPa to 400 GPa. In still another embodiment, used for bead core 112 has a tensile modulus in the range of 100 GPa to 300 GPa. As used herein, the tensile modulus is measured according to e.g., ASTM D3916.

While the present subject matter has been described in detail with respect to specific exemplary embodiments and methods thereof, it will be appreciated that those skilled in the art, upon attaining an understanding of the foregoing may readily produce alterations to, variations of, and equivalents to such embodiments. Accordingly, the scope of the present disclosure is by way of example rather than by way of limitation, and the subject disclosure does not preclude inclusion of such modifications, variations and/or additions to the present subject matter as would be readily apparent to one of ordinary skill in the art using the teachings disclosed herein.

## Claims

1. A method for producing a bead core (112) for the bead portion (102) of a tire (100), the method including:

    forming an elongate and uncured carbon fiber composite into the shape of a ring or coil; and curing the carbon fiber composite after the forming;
    wherein the carbon fiber composite has a strain ε of 0.1 percent or less after the curing, and wherein

    $$\varepsilon = (r_s / R_D) * 100$$

    with $r_s$ being a radius of the material from a centerline (CL) of the material and $R_D$ being a radius to the centerline (CL) after bending from a linear to a curved condition.

2. The method for producing a bead core (112) as in claim 1, wherein the forming comprises wrapping the carbon fiber composite around a roller (216) or wheel before the curing.

3. The method for producing a bead core (112) as in claim 2, wherein the carbon fiber composite is wrapped multiple times.

4. The method for producing a bead core (112) as in claim 2, wherein the carbon fiber composite is wrapped in a spiral manner multiple times while moving along a process direction.

5. The method for producing a bead core (112) as in claim 1, wherein the forming step comprises moving the carbon fiber composite along a process direction through a die (208, 212) having an arcuate shape.

6. The method for producing a bead core (112) as in claims 4 or 5, further comprising the curing of the carbon fiber composite as it moves along the process direction.

7. The method for producing a bead core (112) as in any of the preceding claims, wherein the carbon fiber composite is sheathed within one or more rubber materials after the forming.

8. The method for producing a bead core (112) as in any of the preceding claims, wherein the carbon fiber composite comprises carbon fibers embedded in a resin.

9. The method of claim 8, wherein the carbon fibers are impregnated with the resin.

10. The method of claims 8 or claim 9, wherein the resin is a thermoset resin.

11. The method of claims 8 or claim 9, wherein the resin is one or more of an epoxy resin, vinyl ester resin, and unsaturated polyester resins

12. The method of claim 1, wherein the carbon fiber composite has a strain at break of 2.2 percent or less.

13. The method of claim 1, wherein the carbon fiber composite has a strain at break in the range of 0.6 percent to 1.8 percent.

14. The method of claim 1, wherein the carbon fiber composite has a tensile modulus in the range of 100 GPa to 400 GPa.

15. The method of claim 1, wherein the carbon fiber composite has a tensile modulus in the range of 100 GPa to 300 GPa.


**Patentansprüche**

1. Verfahren zur Herstellung eines Wulstkerns (112) für den Wulstabschnitt (102) eines Reifens (100), wobei das Verfahren umfasst:

   Formen eines länglichen und ungehärteten Kohlefaserverbundwerkstoffs in die Form eines Rings oder einer Spule; und
   Aushärtung des Kohlefaserverbundwerkstoffs nach dem Formen;
   wobei der Kohlenstofffaserverbundwerkstoff nach dem Aushärten eine Dehnung ε von 0,1 Prozent oder weniger aufweist, und wobei

   $$\varepsilon = (r_s / R_D) * 100$$

   wobei rs ein Radius des Materials von einer Mittellinie (CL) des Materials ist und RD ein Radius zur Mittellinie (CL) nach dem Biegen von einem linearen in einen gekrümmten Zustand ist.

2. Verfahren zur Herstellung eines Wulstkerns (112) nach Anspruch 1, wobei das Formen das Wickeln des Kohlefaserverbundwerkstoffs um eine Rolle (216) oder ein Rad vor dem Aushärten umfasst.

3. Verfahren zur Herstellung eines Wulstkerns (112) nach Anspruch 2, wobei der Kohlefaserverbundwerkstoff mehrfach gewickelt wird.

4. Verfahren zur Herstellung eines Wulstkerns (112) nach Anspruch 2, wobei der Kohlefaserverbundwerkstoff mehrfach spiralförmig gewickelt wird, während er sich entlang einer Prozessrichtung bewegt.

5. Verfahren zur Herstellung eines Wulstkerns (112) nach Anspruch 1, wobei der Formschritt das Bewegen des Kohlefaserverbundwerkstoffs entlang einer Verfahrensrichtung durch eine Matrize (208, 212) mit einer bogenförmigen Form umfasst.

6. Verfahren zur Herstellung eines Wulstkerns (112) nach Anspruch 4 oder 5, das ferner das Aushärten des Kohlefaserverbundwerkstoffs bei seiner Bewegung entlang der Verfahrensrichtung umfasst.

7. Verfahren zur Herstellung eines Wulstkerns (112) nach einem der vorstehenden Ansprüche, wobei der Kohlefaserverbundwerkstoff nach dem Formen mit einem oder mehreren Gummimaterialien ummantelt wird.

8. Verfahren zur Herstellung eines Wulstkerns (112) nach einem der vorhergehenden Ansprüche, wobei der Kohlefaserverbundwerkstoff in ein Harz eingebettete Kohlefasern umfasst.

9. Verfahren nach Anspruch 8, bei dem die Kohlenstofffasern mit dem Harz imprägniert werden.

10. Verfahren nach Anspruch 8 oder 9, wobei das Harz ein wärmehärtbares Harz ist.

11. Verfahren nach Anspruch 8 oder 9, wobei das Harz eines oder mehrere aus einem Epoxidharz, Vinylesterharz und ungesättigten Polyesterharzen ist.

12. Verfahren nach Anspruch 1, wobei der Kohlefaserverbundwerkstoff eine Bruchdehnung von 2,2 Prozent oder weniger aufweist.

13. Verfahren nach Anspruch 1, wobei der Kohlefaserverbundwerkstoff eine Bruchdehnung im Bereich von 0,6 Prozent bis 1,8 Prozent aufweist.

14. Verfahren nach Anspruch 1, wobei der Kohlefaserverbundwerkstoff einen Zugmodul im Bereich von 100 GPa bis 400 GPa aufweist.

15. Verfahren nach Anspruch 1, wobei der Kohlefaserverbundwerkstoff einen Zugmodul im Bereich von 100 GPa bis 300 GPa aufweist.

## Revendications

1. Procédé de production d'une tringle de talon (112) pour la portion de talon (102) d'un pneumatique (100), le procédé comportant :

   la formation d'un matériau composite en fibres de carbone allongé et non durci ayant la forme d'un anneau ou d'une bobine ; et
   le durcissement du matériau composite en fibres de carbone après la formation ;
   dans lequel le matériau composite en fibres de carbone a une contrainte ε de 0,1 pour cent ou moins après le durcissement, et
   dans lequel

   $$\varepsilon = (r_S/R_D) * 100$$

   où $r_S$ est un rayon du matériau depuis une ligne centrale (CL) du matériau et $R_D$ est un rayon jusqu'à la ligne centrale (CL) après la flexion d'un état linéaire à un état incurvé.

2. Procédé de production d'une tringle de talon (112) selon la revendication 1, dans lequel la formation comprend l'enroulement du matériau composite en fibres de carbone autour d'un rouleau (216) ou d'une roue avant le durcissement.

3. Procédé de production d'une tringle de talon (112) selon la revendication 2, dans lequel le matériau composite en fibres de carbone est enroulé plusieurs fois.

4. Procédé de production d'une tringle de talon (112) selon la revendication 2, dans lequel le matériau composite en fibres de carbone est enroulé en spirale plusieurs fois en se déplaçant dans une direction de traitement.

5. Procédé de production d'une tringle de talon (112) selon la revendication 1, dans lequel l'étape de formation comprend le déplacement du matériau composite en fibres de carbone dans une direction de traitement à travers une filière (208, 212) de forme arquée.

6. Procédé de production d'une tringle de talon (112) selon la revendication 4 ou la revendication 5, comprenant en outre le durcissement du matériau composite en fibres de carbone au fur et à mesure de son déplacement dans la direction de traitement.

7. Procédé de production d'une tringle de talon (112) selon l'une quelconque des revendications précédentes, dans lequel le matériau composite en fibres de carbone est gainé à l'intérieur d'un ou plusieurs matériaux en caoutchouc après la formation.

8. Procédé de production d'une tringle de talon (112) selon l'une quelconque des revendications précédentes, dans lequel le matériau composite en fibres de carbone comprend des fibres de carbone incorporées dans une résine.

9. Procédé selon la revendication 8, dans lequel les fibres de carbone sont imprégnées de la résine.

10. Procédé selon la revendication 8 ou la revendication 9, dans lequel la résine est une résine thermodurcissable.

11. Procédé selon la revendication 8 ou la revendication 9, dans lequel la résine est une ou plusieurs parmi une résine époxy, une résine vinylester, et des résines de polyester insaturé.

12. Procédé selon la revendication 1, dans lequel le matériau composite en fibres de carbone a une contrainte à la rupture de 2,2 pour cent ou moins.

13. Procédé selon la revendication 1, dans lequel le matériau composite en fibres de carbone a une contrainte à la rupture dans la plage de 0,6 pour cent à 1,8 pour cent.

14. Procédé selon la revendication 1, dans lequel le matériau composite en fibres de carbone a un module de traction dans la plage de 100 GPa à 400 GPa.

15. Procédé selon la revendication 1, dans lequel le matériau composite en fibres de carbone a un module de traction dans la plage de 100 GPa à 300 GPa.

FIG. -1-

FIG. -2-

EP 3 393 825 B1

FIG. -3-

EP 3 393 825 B1

FIG. -4-

11

FIG. -5-

FIG. -6-

**EP 3 393 825 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 1567069 W